Europäisches Patentamt

European Patent Office

Office européen des brevets

(19)

(11) Numéro de publication : **0 060 598**
**B1**

(12) **FASCICULE DE BREVET EUROPÉEN**

(45) Date de publication du fascicule du brevet :
13.06.84

(51) Int. Cl.³ : **H 04 M 3/30**, H 04 Q 3/00

(21) Numéro de dépôt : 82200295.2

(22) Date de dépôt : 08.03.82

(54) **Système de test de joncteurs d'abonnés.**

(30) Priorité : 18.03.81 FR 8105408

(43) Date de publication de la demande :
22.09.82 Bulletin 82/38

(45) Mention de la délivrance du brevet :
13.06.84 Bulletin 84/24

(84) Etats contractants désignés :
**BE CH DE FR GB LI SE**

(56) Documents cités :
**DE-B- 2 903 391**
**FR-A- 2 399 775**
**US-A- 4 143 250**
**PATENT ABSTRACTS OF JAPAN, vol. 4, no. 32, 19 mars 1980, page 514 E 2**
**PATENT ABSTRACTS OF JAPAN, vol. 4, no. 170, 22 novembre 1980, page 652 E 35**

(73) Titulaire : **TELECOMMUNICATIONS RADIOELECTRI-QUES ET TELEPHONIQUES T.R.T.**
**88, rue Brillat Savarin**
**F-75013 Paris (FR)**

(72) Inventeur : **Forestier, Alain**
**SOCIETE CIVILE S.P.I.D. 209, rue de l'Université**
**F-75007 Paris (FR)**

(74) Mandataire : **Charpail, François et al**
**Société Civile S.P.I.D. 209, rue de l'Université**
**F-75007 Paris (FR)**

## Description

L'invention concerne un système de test de joncteurs d'abonné qui sont reliés d'un côté à des lignes d'abonnés et qui, de l'autre côté, sont mis en communication, lors d'un test, avec un appareil de test émettant des signaux de test en direction des joncteurs d'abonné et recevant de ces joncteurs des signaux répondant à ces signaux de test.

On sait que les joncteurs d'abonné ou circuits d'interface de lignes d'abonné ont des fonctions extrêmement variées. Par son accès deux fils reliés à une ligne d'abonné, un joncteur doit alimenter cette ligne en courant continu ou en courant de sonnerie. Par son accès quatre fils à relier au réseau de connexion d'un central téléphonique, le joncteur reçoit des signaux de parole en provenance du central et émet des signaux de parole en direction de ce central, un circuit de conversion deux fils-quatre fils permettant d'obtenir que les signaux de parole reçus et émis sur des bornes distinctes de l'accès quatre fils apparaissent sur les mêmes bornes de l'accès deux fils, avec le minimum de pertes dans le joncteur, et le minimum de couplage entre les deux sens de transmission. Des amplificateurs sont généralement prévus pour amplifier les signaux vocaux. Un joncteur d'abonné est en outre en liaison avec le central téléphonique pour en recevoir des signaux de commande tels que la commande de sonnerie ou la commande d'inversion de batterie et pour lui fournir le signal de détection de boucle indiquant le décrochage du combiné ou les ruptures de boucle.

Le système de test envisagé concerne des joncteurs d'abonné installés et a pour but de vérifier automatiquement le fonctionnement de tous les circuits qui, dans ces joncteurs, assurent les diverses fonctions précitées.

Dans un premier système de test connu et décrit dans le brevet français n° 2 399 775, chaque joncteur est testé séparément. Lors d'un test, un émetteur et un récepteur de signaux de test à fréquences vocales sont connectés à l'accès quatre fils du joncteur à tester. Le test est basé sur le fait qu'une fraction du signal de test fourni par l'émetteur parvient au récepteur par suite d'un certain déséquilibre, naturel ou provoqué, du circuit de couplage deux fils-quatre fils. Mais il est clair qu'un tel système ne fournit qu'un test de continuité pour les circuits de transmission des signaux à fréquence vocale et ne permet pas de tester tous ces circuits (notamment les amplificateurs) dans leurs conditions de fonctionnement normales. En outre tous les circuits du joncteur ayant d'autres fonctions que la transmission des signaux de parole, ne sont pas testés.

Dans un deuxième système de test connu, chaque joncteur est aussi testé séparément, mais en connectant à un appareil de test automatique, non seulement son accès quatre fils, mais également son accès deux fils et ses bornes pour signaux de commande et signal de détection de boucle. Il est alors clair qu'avec un appareil de test comportant tous les émetteurs et récepteurs de signaux de test nécessaires et des appareils de mesure convenables, on peut tester tous les circuits du joncteur dans toutes les conditions de fonctionnement que l'on désire. Ce système de test convient parfaitement lorsque tous les joncteurs d'abonné à tester sont localisés au même endroit que l'appareil de test automatique (par exemple dans un central téléphonique). Mais cet appareil de test est un appareil assez coûteux dont l'emploi ne peut se justifier que s'il est utilisé pour un groupe de joncteurs en nombre assez important (par exemple de l'ordre d'un millier). Or dans certains systèmes de télécommunications desservant des abonnés très éloignés du central téléphonique, les joncteurs d'abonnés sont regroupés en un certain nombre d'endroits dispersés et éloignés du central. Chaque groupe ne comporte qu'un nombre réduit de joncteurs qui ne communiquent avec le central que par leurs accès quatre fils et leurs bornes pour signaux de commande et de détection de boucle. Avec le deuxième système de test connu on devrait munir chaque groupe de joncteurs d'un appareil de test automatique, ce qui serait une solution très onéreuse.

La présente invention a pour but de pallier cet inconvénient en fournissant un système permettant, avec un appareil de test situé à un niveau concentré tel qu'un central téléphonique, de tester à distance des joncteurs d'abonné dans toutes les conditions de fonctionnement que l'on désire, en n'utilisant que les liaisons normalement existantes.

Conformément à l'invention, dans un système de test de joncteurs d'abonné il est prévu un bus de test commun à un groupe de joncteurs et des moyens de commutation pour déconnecter chaque joncteur de sa ligne d'abonné et le connecter audit bus de test, des moyens de commande étant prévus dans l'appareil de test pour connecter, selon le test à effectuer, un joncteur ou deux joncteurs audit bus de test.

Pour tester les circuits de parole des joncteurs, il est prévu dans l'appareil de test un émetteur et un récepteur de signal de tonalité, des moyens de commande pour connecter simultanément deux joncteurs à tester au bus de test et des moyens de commande pour connecter simultanément l'accès réception d'un joncteur et l'accès émission de l'autre joncteur respectivement à l'émetteur et au récepteur de signal de tonalité, le signal fourni par ce récepteur indiquant le fonctionnement des circuits de parole testés dans les deux joncteurs.

Pour tester les circuits de sonnerie des joncteurs, on connecte également simultanément deux joncteurs au bus de test et on applique sur le joncteur dont on veut tester le circuit de sonnerie un signal de tonalité au lieu du signal de sonnerie, ce signal de tonalité étant reçu, via des circuits de parole de l'autre joncteur, sur un récepteur de l'appareil de test.

Pour tester le circuit de détection de boucle de chaque joncteur, ce joncteur est successivement connecté et déconnecté d'une boucle constituée par le bus de test refermé sur une résistance ayant sensiblement la résistance d'une boucle normale d'abonné. L'observation dans l'appareil de test du signal de sortie du circuit de détection de boucle permet de vérifier son fonctionnement.

Pour tester le circuit d'inversion de batterie de chaque joncteur, ce joncteur est connecté sur une boucle constituée par le bus de test refermé sur une diode en série avec une résistance ayant sensiblement la résistance d'une boucle normale d'abonné ; on commande dans ce joncteur des inversions de batterie. L'observation dans l'appareil de test du signal de sortie du circuit de détection de boucle du joncteur permet de vérifier le fonctionnement de son circuit d'inversion de batterie.

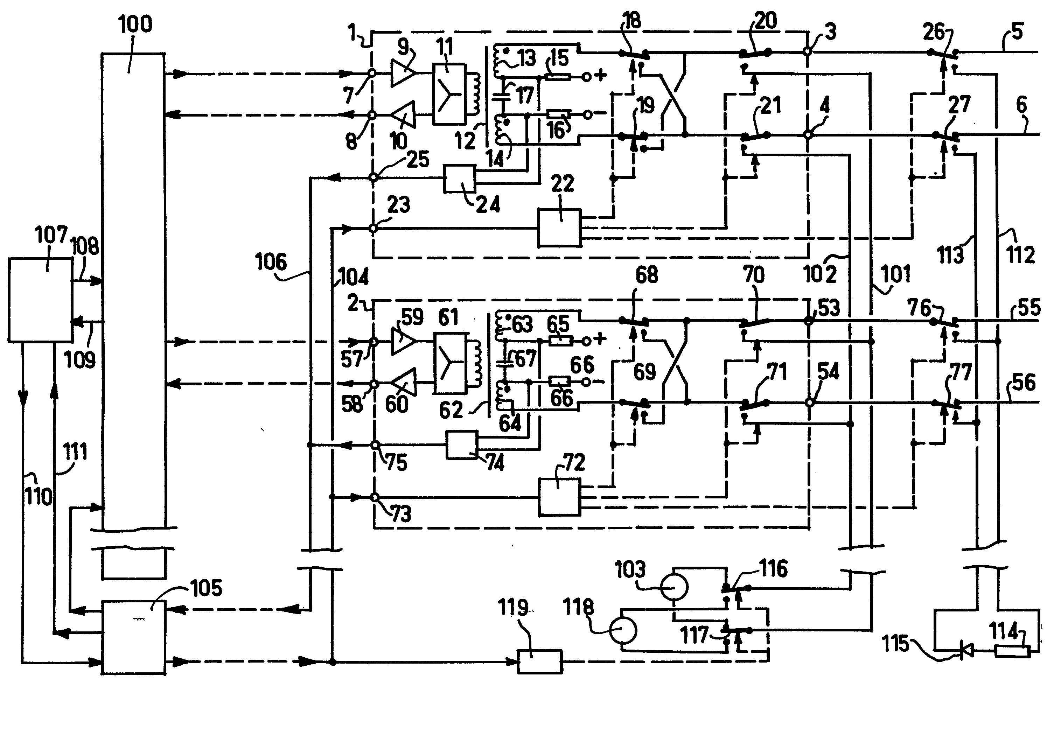

La description suivante en regard du dessin annexé, le tout donné à titre d'exemple fera bien comprendre comment l'invention peut être réalisée.

La figure unique représente le système de test de joncteurs d'abonné conforme à l'invention.

Sur cette figure, on a représenté deux joncteurs d'abonné 1 et 2 faisant partie d'un groupe de joncteurs d'abonné à tester. Le joncteur d'abonné 1 comporte un accès deux fils formé par les deux bornes 3 et 4 qui sont à raccorder aux deux fils 5 et 6 de la ligne d'abonné. L'accès quatre fils du joncteur d'abonné 1 est constitué par un accès réception représenté pour simplifier par une seule borne 7 et un accès émission représenté également par une seule borne 8. Les bornes de l'accès quatre fils du joncteur sont reliées à un réseau de connexion 100 d'un central téléphonique qui peut être proche ou distant des joncteurs à tester comme on le précisera par la suite.

Selon la représentation simplifiée indiquée sur la figure, l'accès réception 7 et l'accès émission 8 du joncteur 1 sont connectés, respectivement par l'intermédiaire des amplificateurs 9 et 10, à un circuit de couplage deux fils-quatre fils 11 (ou jonction hybride). La sortie en deux fils du circuit de couplage 11 est reliée à un enroulement du transformateur 12 qui possède deux autres enroulements 13 et 14 identiques. Un petit cercle en regard d'une extrémité des enroulements 13 et 14 indique de façon classique le sens de bobinage de ces enroulements ; cette extrémité est appelée entrée de l'enroulement et l'autre extrémité est appelée sortie de l'enroulement. La sortie de l'enroulement 13 et l'entrée de l'enroulement 14 sont reliées respectivement aux bornes positive et négative d'une batterie d'alimentation non représentée, à travers les deux résistances 15 et 16 de même valeur. En outre la sortie de l'enroulement 13 est connectée à l'entrée de l'enroulement 14 à travers un condensateur 17 ayant une forte capacité et constituant pratiquement un court-circuit pour les signaux de parole. L'entrée de l'enroulement 13 et la sortie de l'enroulement 14 sont connectées respectivement aux deux contacts mobiles de deux circuits commutateurs inverseurs 18 et 19 dont les contacts repos et travail sont reliés entre eux comme l'indique la figure. Ces deux circuits commutateurs commandés simultanément servent à inverser la polarité de la tension de la batterie d'alimentation sur les deux fils 5 et 6 de la ligne d'abonné. Le joncteur 1 comporte deux autres circuits commutateurs inverseurs 20 et 21 dont les contacts repos sont connectés, via les circuits commutateurs inverseurs 18 et 19, aux bornes de la batterie d'alimentation et dont les contacts de travail sont connectés, via les deux fils 101, 102 d'un bus dit de sonnerie commun à tous les joncteurs à tester, aux bornes d'un générateur 103 de tension alternative de sonnerie ; les contacts mobiles des circuits commutateurs 20 et 21 sont connectés aux bornes 3 et 4 du joncteur. Les deux circuits commutateurs inverseurs 20 et 21, commandés simultanément, servent à établir entre les deux fils 5 et 6 de la ligne d'abonné, soit la tension continue de la batterie d'alimentation, soit la tension alternative de sonnerie.

Le joncteur 1 comporte également un dispositif de commande 22 dans lequel sont regroupés les éléments tels que des bobines de relais et des circuits électroniques servant à commander les circuits commutateurs 18, 19 et 20, 21 à partir de signaux dits de signalisation apparaissant sur la borne 23 du joncteur et véhiculés par le bus 104 commun à tous les joncteurs. Ces signaux de signalisation servant à des commandes dans le joncteur sont engendrés par l'unité de commande et de traitement 105 du central téléphonique, qui a d'autre part la fonction de commander des connexions dans le réseau de connexion 100, en fonction des liaisons téléphoniques à assurer. Cette unité 105 de commande et de traitement peut être également proche ou distante des joncteurs à tester. Le joncteur 1 comporte enfin un circuit de détection de boucle 24 qui est chargé de détecter si la boucle d'abonné est ouverte ou fermée. Cette détection est effectuée par une mesure différentielle du courant continu fourni par la batterie d'alimentation à la ligne d'abonné. Le détecteur de boucle 24 est connecté pour cela entre les bornes des résistances 15 et 16 non reliées aux bornes de la batterie. L'information de l'état de la boucle constitue un signal de signalisation qui apparaît sur la borne 25 et qui est appliqué au bus 106 commun à tous les joncteurs à tester, puis transmis à l'unité de commande et de traitement 105.

Le joncteur 2 comporte exactement les mêmes éléments que le joncteur 1, câblés de la même manière et il est raccordé de la même manière, d'un côté aux deux fils d'une ligne d'abonné et de l'autre côté au réseau de connexion 100 et à l'unité de commande et de traitement 105 du central téléphonique. Tous les éléments propres au joncteur 1 et désignés par les références allant de 3 à 25, se retrouvent dans le joncteur 2 où ils sont désignés respectivement par les références allant de 53 à 75. D'autres joncteurs non représentés sont bien entendu connectés à d'autres lignes d'abonné, au générateur commun de sonnerie 103 et aux éléments 100 et 105 du central téléphonique.

Comme on l'a déjà indiqué, dans les systèmes connus de test de joncteurs, chaque joncteur est toujours testé séparément. Par exemple, dans un système connu, un joncteur à tester tel que le joncteur 1 est raccordé au moment d'un test à un appareil de test automatique à la fois par son accès deux fils 3 et 4, son accès quatre fils 7 et 8 et son accès de signalisation 23 et 25. Mais avec ce système, on ne peut pas tester à distance des joncteurs, par exemple depuis un central téléphonique, puisque ces joncteurs ne sont pas normalement reliés à ce central par leurs accès deux fils. Dans l'autre système de test connu décrit dans le brevet français n° 2 399 775 il n'est pas nécessaire de relier l'accès deux fils des joncteurs à l'appareil de test automatique mais on n'effectue qu'un simple test de continuité des circuits de parole du joncteur 1 par exemple, en déséquilibrant au moment d'un test sa jonction hybride 11. La présente invention permet au contraire un test complet des joncteurs, sans nécessité non plus de relier leurs accès deux fils à un appareil de test automatique.

Pour décrire maintenant le système de test de l'invention, on suppose que les joncteurs à tester, tels que les joncteurs 1 et 2, sont distants du central téléphonique où sont installés le réseau de connexion 100 et l'unité de commande et de traitement 105. Les liaisons représentées en traits pointillés entre le réseau de connexion 100 et l'unité 105 d'une part et les joncteurs d'autre part, peuvent être effectuées de n'importe quelle manière, par fils ou non, par multiplex ou non. Un appareil de test automatique 107 comporte deux bornes 108, 109 connectées respectivement dans l'appareil à un émetteur et à un récepteur non représentés, de signaux de tonalité. Ces signaux de tonalité constituent des signaux de test pour tester les joncteurs dans la bande des signaux vocaux. Ces bornes d'émission et de réception 108, 109 sont reliées à des bornes correspondantes du réseau de connexion 100. L'appareil de test automatique 107 comporte également une borne 110 pour émettre des signaux de commande vers l'unité de commande et de traitement 105. En particulier, pour un signal de commande apparaissant sur la borne 110, l'unité 105 peut établir le réseau de connexion 100 dans une configuration telle que la borne d'émission de tonalité 108 soit reliée à la borne réception d'un joncteur et que la borne de réception de tonalité 109 soit reliée à la borne d'émission d'un autre joncteur. Sous l'effet d'autres signaux de commande apparaissant sur la borne 110, l'unité 105 peut fournir différentes commandes de signalisation en direction de n'importe quel joncteur. Enfin l'appareil de test automatique 107 comporte une borne 111 pour recevoir le résultat du traitement des signaux effectué dans l'unité 105, et notamment du signal de détection de boucle provenant de n'importe quel joncteur.

Dans le système de test de l'invention, à chaque joncteur tel que le joncteur 1 sont associés deux circuits commutateurs inverseurs 26 et 27 dont les contacts mobiles sont reliés aux deux bornes 3 et 4 de l'accès deux fils du joncteur, dont les contacts repos sont reliés aux deux fils 5 et 6 de la ligne d'abonné et dont les contacts travail sont reliés aux deux fils 112, 113 formant un bus bifilaire commun à tous les joncteurs et appelé par la suite bus de test. Les deux circuits commutateurs inverseurs 26 et 27 sont commandés simultanément par des circuits inclus dans le dispositif de commande 22, à partir de signaux élaborés dans l'unité de commande et de traitement 105. Ces deux circuits commutateurs 26 et 27 en position repos en dehors de la période de test, peuvent être établis en position travail pendant la période de test, sous l'effet des signaux de commande fournis sur la borne 110 et l'appareil de test 107 ; les deux bornes 3 et 4 de l'accès deux fils du joncteur sont alors connectées au bus de test 112, 113. Au joncteur 2 sont associés deux circuits commutateurs 76 et 77 connectés et commandés de la même manière que les deux circuits commutateurs 26 et 27. Les deux fils 112, 113 du bus de test sont connectés à une de leurs extrémités au montage en série de la résistance 114 et de la diode 115.

Dans le système de test de l'invention, pour tout le groupe de joncteurs à tester utilisant le même générateur de signal de sonnerie 103, il est prévu les deux circuits commutateurs inverseurs 116, 117 dont les contacts mobiles sont reliés aux deux fils 101, 102, dont les contacts repos sont reliés aux deux bornes du générateur de signal de sonnerie 103 et dont enfin les contacts travail sont reliés aux deux bornes d'un générateur de signal de tonalité 118. Ces deux circuits commutateurs 116, 117 sont commandés simultanément par le dispositif de commande 119, à partir d'un signal de commande élaboré dans l'unité 105, pour établir entre les fils 101, 102, soit le signal de sonnerie, soit un signal de tonalité.

On va maintenant décrire les différentes opérations à effectuer dans le système de test de l'invention, pour tester les différents circuits des joncteurs. Ces opérations sont effectuées dans la pratique automatiquement sous la commande de l'appareil de test automatique 107. On ne décrira pas en détail cet appareil que l'homme de l'art pourra construire aisément à partir de la description des diverses opérations qu'il doit commander.

Pour effectuer le test des circuits de parole, on couple simultanément les accès deux fils de deux joncteurs tels que 1 et 2 sur les deux fils 112, 113 du bus de test. Pour cela les circuits commutateurs 26, 27 et 76, 77 sont commandés pour être établis sur la position travail, inverse de celle représentée sur la figure. Les circuits commutateurs 20 et 21 sont établis sur la position repos, représentée sur la figure, afin que les deux joncteurs puissent transmettre les signaux de parole. Une première partie du test des circuits de parole des deux joncteurs 1 et 2 consiste alors à faire apparaître sur l'accès réception 7 du joncteur 1 un signal de tonalité qui doit, en cas de bon fonctionnement, apparaître entre les bornes 3 et 4 du joncteur 1, puis se trouver appliqué via le bus de test 112, 113 entre les bornes 53, 54 du joncteur 2 et enfin apparaître sur l'accès émission 58 du joncteur 2. On a ainsi testé les circuits de parole du joncteur 1 dans le sens central vers abonné et les circuits de parole du joncteur 2 dans le sens abonné vers central. Une deuxième partie du test permet de tester dans le sens inverse les circuits de parole des joncteurs 1 et 2 ; il suffit évidemment pour cela de faire apparaître sur l'accès réception 57 du joncteur 2 un signal de tonalité qui, en cas de bon fonctionnement, doit être transmis sur l'accès émission 8 du joncteur 1. Si dans l'un ou l'autre des deux tests effectués, il se révèle un mauvais fonctionnement des circuits de parole testés, on ne sait pas si le circuit de parole défectueux appartient au joncteur 1 ou au joncteur 2 ; mais il est clair que le doute peut être levé en refaisant le même test sur le joncteur 1 ou le joncteur 2 couplé par le bus de test avec un autre joncteur en bon état. Toutes les commandes que l'on vient de décrire, nécessaires pour le test des circuits de parole des joncteurs, peuvent être effectuées depuis l'appareil de test 107 ; comme on l'a expliqué, les circuits commutateurs 26, 27 et 76, 77 sont commandés, par l'intermédiaire de l'unité 105 ; le réseau de connexion 100 est également commandé par l'intermédiaire de l'unité 105, pour faire apparaître le signal de tonalité fourni par l'émetteur de tonalité de l'appareil de test 107 sur une borne réception d'un joncteur et pour faire apparaître le signal de tonalité recueilli sur une borne émission d'un joncteur sur un récepteur de tonalité de l'appareil de test 107. Ce dernier contient également tous les appareils nécessaires pour la mesure des signaux émis et reçus.

Pour effectuer le test des circuits de sonnerie des joncteurs 1 et 2, c'est-à-dire le test des circuits commutateurs 20, 21 et 70, 71 et de leurs circuits de commande inclus dans les dispositifs 22 et 72, les circuits commutateurs 26, 27 et 76, 77 sont commandés pour être établis sur leur position travail pour coupler les accès deux fils des joncteurs 1 et 2 sur les deux fils 112, 113 du bus de test. En même temps, les deux circuits commutateurs 116, 117 sont commandés pour être établis sur la position travail inverse de celle représentée sur la figure pour qu'un signal de tonalité fourni par le générateur 118 apparaisse sur les deux fils 101, 102 du bus de sonnerie. Pour tester le circuit de sonnerie du joncteur 1, les circuits commutateurs 20 et 21 sont commandés sur la position sonnerie, c'est-à-dire sur la position travail inverse de celle représentée sur la figure. Alors, en cas de bon fonctionnement, le signal de tonalité présent entre les deux fils 101, 102 du bus de sonnerie apparaît via le bus de test 112, 113 entre les deux bornes 53, 54 du joncteur 2 ; ce signal de tonalité est ensuite transmis, via les contacts repos des circuits commutateurs 70, 71 et les circuits de parole du joncteur 2, vers l'accès émission 58 du joncteur 2. Le test du circuit de sonnerie du joncteur 2 est effectué de façon analogue en commandant les deux circuits commutateurs 70 et 71 sur la position sonnerie inverse de celle représentée sur la figure. Ici encore il est clair que toutes les commandes nécessaires au test des circuits de sonnerie peuvent être effectuées depuis l'appareil de test 107. On peut également mesurer dans cet appareil de test le signal de tonalité provenant du générateur 118 par le chemin indiqué ci-dessus et reçu par l'intermédiaire du réseau de connexion 100. On peut noter que, pour l'essai des circuits de sonnerie, on peut éviter d'utiliser un générateur spécial de tonalité 118, en utilisant simplement comme signal de tonalité, le signal sortant du générateur de sonnerie 103 et affaibli suffisamment pour qu'il puisse être appliqué aux circuits de parole des joncteurs.

Pour effectuer le test d'un circuit détecteur de boucle, par exemple le circuit détecteur de boucle 24 du joncteur 1, les deux circuits commutateurs 20 et 21 sont établis sur la position repos indiquée sur la figure. Le test du circuit détecteur de boucle 24 consiste à commander successivement les circuits commutateurs 26 et 27 associés au joncteur 1 sur leur position repos et sur leur position travail. Lorsque les deux circuits commutateurs 26 et 27 sont sur la position travail inverse de celle indiquée sur la figure, il circule à travers les deux fils 112, 113 du bus de test refermé sur le montage en série de la résistance 114 et de la diode 115 connectée dans le sens convenable, un courant continu fourni par la batterie connectée aux bornes d'alimentation positive et négative du joncteur ; avec une résistance 114 sensiblement égale à la résistance normale d'une boucle d'abonné, ce courant est égal au courant normal dans une boucle d'abonné. Lorsque les deux circuits commutateurs 26 et 27 sont sur la position repos représentée sur la figure, ce courant de boucle dans le bus de test s'annule. Le détecteur de boucle 24 agencé pour mesurer le courant continu engendré par le joncteur sur son accès deux fils 3 et 4, fournira donc, s'il est en bon état de fonctionnement, une information de boucle fermée ou de boucle ouverte selon que les circuits commutateurs 26 et 27 sont commandés dans la position travail ou la position repos. On peut noter ici que pour le test des circuits détecteurs de boucle, la diode 115 n'est pas nécessaire ; elle est par contre indispensable pour le test des circuits d'inversion de batterie.

Pour effectuer le test du circuit d'inversion de batterie du joncteur 1 par exemple, c'est-à-dire des circuits commutateurs 18 et 19 et de leur circuit de commande inclus dans le dispositif 22, les circuits commutateurs 20 et 21 sont établis sur la position repos représentée sur la figure et les circuits commutateurs 26 et 27 sont établis sur la position travail inverse de celle représentée sur la figure. Le test du circuit d'inversion de batterie consiste à commander successivement les circuits commutateurs 18 et 19 dans la position repos et dans la position travail. Lorsque ces circuits commutateurs sont dans la position repos représentée sur la figure, il circule le courant de boucle normal à travers les deux fils 112, 113 du bus de test refermé sur le montage en série de la résistance 114 et de la diode 115. Lorsque les deux circuits commutateurs 18 et 19 sont dans la position travail inverse de celle représentée sur la figure, la tension de batterie est inversée et la diode 115 empêche le courant de boucle de circuler dans le bus de test. Par conséquent, si le circuit d'inversion de batterie du joncteur 1 est en bon état de fonctionnement, le détecteur de boucle 24 fournit une information de rupture de boucle chaque fois que la tension de batterie est inversée.

Il est clair d'après les explications déjà fournies que les commandes nécessitées par les tests de circuit de détection de boucle et d'inversion de batterie peuvent être effectuées entièrement depuis l'appareil de test 107, tandis que l'on peut vérifier dans cet appareil de test la réponse du joncteur à ces commandes.

Dans le système de test que l'on vient de décrire, le même appareil de test 107 peut bien entendu servir à tester plusieurs groupes de joncteurs géographiquement séparés. Les situations géographiques des différents éléments, appareil de test, réseau de connexion, unité de commande et de traitement, joncteurs, peuvent être quelconques pourvu que, sous la commande de l'appareil de test, des communications puissent être établies entre cet appareil et les joncteurs.

**Revendications**

1. Système de test de joncteurs d'abonné (1, 2) qui, d'un côté, sont reliés à des lignes d'abonné (5, 6 ou 55, 56) et qui, de l'autre côté, sont mis en communication, lors d'un test, avec un appareil de test (107) émettant des signaux de test en direction des joncteurs d'abonné et recevant de ces joncteurs des signaux répondant à ces signaux de test, caractérisé en ce qu'il est prévu un bus de test (112, 113) commun à un groupe de joncteurs et des moyens de commutation (26, 27 ou 76, 77) pour déconnecter chaque joncteur de sa ligne d'abonné et le connecter audit bus de test, des moyens de commande étant prévus dans l'appareil de test pour connecter, selon le test à effectuer, un joncteur ou deux joncteurs audit bus de test.

2. Système de test selon la revendication 1, caractérisé en ce que, pour tester les circuits de parole des joncteurs, sont prévus dans l'appareil de test (107), un émetteur et un récepteur de signal de tonalité, des moyens de commande pour connecter simultanément deux joncteurs à tester au bus de test (112, 113) et des moyens de commande pour connecter simultanément l'accès réception (7) d'un joncteur (1) et l'accès émission (58) de l'autre joncteur (2) respectivement à l'émetteur et au récepteur de signal de tonalité, le signal fourni par ce récepteur indiquant le fonctionnement des circuits de parole testés dans les deux joncteurs.

3. Système de test selon l'une des revendications 1 ou 2, caractérisé en ce que pour chaque groupe de joncteurs utilisant le même générateur (103) de signal de sonnerie sont prévus des moyens de commutation (116, 117) pour connecter un générateur (118) de signal de tonalité à la place dudit générateur de signal de sonnerie et en ce que, pour tester les circuits (20, 21 ou 70, 71) de sonnerie des joncteurs, sont prévus dans l'appareil de test, un récepteur de signal de tonalité, des moyens de commande pour connecter simultanément deux joncteurs à tester au bus de test, des moyens pour commander en sonnerie l'un desdits joncteurs, enfin des moyens pour connecter l'accès émission de l'autre joncteur audit récepteur de signal de tonalité, le signal fourni par ce récepteur indiquant le fonctionnement du circuit de sonnerie du joncteur commandé en sonnerie.

4. Système de test selon l'une des revendications 1 à 3, caractérisé en ce que le bus de test est refermé sur une impédance (114) ayant sensiblement la résistance d'une boucle normale d'abonné, et en ce que, pour tester les détecteurs (24 ou 74) de boucle des joncteurs, sont prévus dans l'appareil de test des moyens de commande pour successivement connecter et déconnecter chaque joncteur à tester du bus de test et des moyens de commande pour diriger vers l'appareil de test le signal de sortie du détecteur de boucle de ce joncteur, la comparaison de ce signal de sortie avec la commande pour successivement connecter et déconnecter le joncteur indiquant le fonctionnement du détecteur de boucle du joncteur.

5. Système de test selon l'une des revendications 1 à 4, caractérisé en ce que le bus de test est refermé sur le montage en série d'une diode (115) et d'une impédance (114) ayant sensiblement la résistance d'une boucle normale d'abonné et en ce que, pour tester les circuits (18, 19 ou 68, 69) d'inversion de batterie des joncteurs, sont prévus dans l'appareil de test des moyens de commande pour connecter chaque joncteur à tester au bus de test, des moyens de commande pour opérer des inversions successives de batterie dans ce joncteur, enfin des moyens de commande pour diriger vers l'appareil de test le signal de sortie du détecteur de boucle du joncteur, la comparaison de ce signal de sortie avec la commande des inversions successives de batterie indiquant le fonctionnement du circuit d'inversion de batterie du joncteur.

**Claims**

1. A system for testing subscriber line interface circuits (1, 2), one end of which is connected to subscriber lines (5, 6 or 55, 56) and the other end is connected, during a test, to a test apparatus (107) transmitting test signals towards the subscriber line interface circuit and receiving from these interface circuits signals responding to these test signals, characterized in that a test bus (112), (113) is provided jointly for one group of interface circuits and in that change-over means (26, 27 or 76, 77) are provided for disconnecting each interface circuit from its subscriber line and connecting it to the said test bus, control means being provided in the test apparatus for connecting, depending on the test to be effected, one interface circuit or two interface circuits to the said test bus.

2. A test system as claimed in Claim 1, characterized in that for testing the speech circuits of the interface circuits there are provided in the test apparatus (107) a tone signal transmitter and a tone signal receiver, control means for simultaneously connecting two interface circuits to be tested to the test bus (112, 113) and control means for simultaneously connecting the receive terminal means (7) of an interface circuit (1) and the transmit terminal means (58) of the other interface circuit (2) to the respective tone signal transmitter and tone signal receiver, the signal supplied by this receiver being indicative of the proper operation of the speech circuit tested in the two interface circuits.

3. A test system as claimed in one of the Claims 1 or 2, characterized in that for each group of interface circuits using the same ringing signal generator (103) there are provided change-over means (116, 117) for connecting a tone signal generator (118) instead of the said ringing signal generator and that, for testing the ringing circuits (20, 21 or 70, 71) of the interface circuits there are provided in the test apparatus a tone signal receiver, control means for connecting the said tone signal generator, control means for simultaneously connecting two interface circuits to be tested to the test bus, means for switching one of the said interface circuits, to the ringing state, finally means for connecting the transmit terminal means of the other interface circuit to the said tone signal receiver, the signal supplied by this receiver being indicative of the proper operation of the ringing circuit of the interface circuit which has been switched to the ringing state.

4. A test system as claimed in any of the Claims 1 to 3, characterized in that the test bus is terminated by an impedance (114) which has substantially the resistance of a normal subscriber loop and that, to test the loop detectors (24 or 74) of the interface circuits there are provided in the test apparatus control means for successively connecting and disconnecting each interface circuit to be tested to and from the test bus and control means for directing the output signal of the said loop detector of this interface circuit to the test apparatus, the comparison between this output signal and the control signal for successively connecting and disconnecting the interface circuit being indicative of the proper operation of the loop detector of the interface circuit.

5. A test system as claimed in any of the Claims 1 to 4, characterized in that the test bus is closed via the series arrangement of a diode (115) and an impedance (114) having substantially the resistance of a normal subscriber loop and that to test the battery inverter circuit (18, 19 or 68, 69) of the interface circuits there are provided in the test apparatus control means for connecting each interface circuit to be tested to the test bus, control means for effecting successive battery voltage inversions in this interface circuit, finally control means for directing the output signal of the loop detector of the interface circuit to the test apparatus, the comparison between this output signal controlling the successive battery voltage inversions being indicative of the proper operation of the battery inverter circuit of the interface circuit.

**Ansprüche**

1. System zum Prüfen von Teilnehmersätzen (1, 2), die einerseits mit Teilnehmerleitungen (5, 6 oder 55, 56) verbunden sind und andererseits, während eines Prüfvorganges, mit einem Prüfapparat (107) verbunden sind, der zu den Teilnehmersätzen Prüfsignale überträgt und von diesen Sätzen auf diese Prüfsignale antwortende Signale erhält, dadurch gekennzeichnet, dass ein gemeinsamer Prüfbus (112, 113) für eine Gruppe von Teilnehmersätzen sowie Schaltmittel (26, 27 oder 76, 77) vorgesehen sind, um jeden Satz von jeder Teilnehmerleitung zu entkoppeln und mit dem genannten Prüfbus zu verbinden, wobei Steuermittel in dem Prüfapparat vorgesehen sind, um abhängig von der durchzuführenden Prüfung einen Teilnehmersatz oder zwei Teilnehmersätze mit dem genannten Prüfbus zu verbinden.

2. Prüfsystem nach Anspruch 1, dadurch gekennzeichnet, dass zum Prüfen der Sprechschaltungen der Teilnehmersätze in dem Prüfapparat (107) ein Tonsignalsender und ein Tonsignalempfänger und Steuermittel vorgesehen sind, zum gleichzeitigen Verbinden zweier zu prüfender Teilnehmersätze mit dem Prüfbus (112, 113) sowie Steuermittel zum gleichzeitigen Verbinden der Empfangsklemme (7) eines Teilnehmersatzes (1) und der Sendeklemme (58) des anderen Satzes (2) mit dem Tonsignalsender bzw. dem Tonsignalempfänger, wobei das von diesem Empfänger gelieferte Signal ein Zeichen für das einwandfreie Funktionieren der geprüften Sprechschaltungen in den zwei Teilnehmersätzen ist.

3. Prüfsystem nach einem der Ansprüche 1 oder 2, dadurch gekennzeichnet, dass für jede Gruppe von Teilnehmersätzen, die den selben Rufgenerator (103) benutzen, Schaltmittel (116, 11) vorgesehen sind zum Verbinden eines Tonsignalgenerators (118) statt des genannten Rufgenerators und dass zum Prüfen der Rufschaltungen (20, 21 oder 70, 71) der Teilnehmersätze in dem Prüfapparat ein Tonsignalempfänger, Steuermittel zum Verbinden des genannten Tonsignalgenerators, Steuermittel zum gleichzeitigen Verbinden zweier zu prüfender Teilnehmersätze mit dem Prüfbus, Mittel zum Umschalten eines der genannten Teilnehmersätze in den Rufzustand und Mittel zum Verbinden der Sendeklemmen des anderen Teilnehmersatzes mit dem genannten Tonsignalempfänger vorgesehen sind, wobei das von diesem Empfänger gelieferte Signal ein Zeichen für das einwandfreie Funktionieren der Rufschaltung des in den Rufzustand geschalteten Teilnehmersatzes ist.

4. Prüfsystem nach einem der Ansprüche 1 bis 3, dadurch gekennzeichnet, dass der Prüfbus durch eine Impedanz (114) abgeschlossen ist, die im wesentlichen den Widerstand einer normalen Teilnehmerschleife hat, und dass zum Prüfen der Schleifendetektoren (23 oder 74) der Teilnehmersätze in dem Prüfapparat Steuermittel vorgesehen sind zum nacheinander Verbinden und Entkoppeln jedes zu prüfenden Teilnehmersatzes mit und von dem Prüfbus sowie Steuermittel zum Zuführen des Ausgangssignals des genannten Schleifendetektors dieses Teilnehmersatzes zu dem Prüfapparat, wobei der Vergleich des Ausgangssignals mit dem zum nacheinander Verbinden und Entkoppeln des Teilnehmersatzes dienenden Steuersignal ein Zeichen für das einwandfreie Funktionieren des Schleifendetektors des Teilnehmersatzes ist.

5. Prüfsystem nach einem der Ansprüche 1 bis 4, dadurch gekennzeichnet, dass der Prüfbus über die Reihenschaltung aus einer Diode (115) und einer Impedanz (114) mit dem Widerstand einer normalen Teilnehmerschleife abgeschlossen ist und dass zum Prüfen der Batterie-Inverterschaltung (18, 19 oder 68, 69) der Teilnehmersätze in dem Prüfapparat Steuermittel zum Verbinden jedes zu prüfenden Teilnehmersatzes mit dem Bus, Steuermittel zum Durchführen aufeinanderfolgender Batteriespannungsinvertierungen in diesem Teilnehmersatz und Steuermittel zum Zuführen des Ausgangssignals des Schleifendetektors des zu prüfenden Teilnehmersatzes zu dem Prüfapparat vorgesehen sind, wobei der Vergleich dieses Ausgangssignals mit dem Steuersignal, das die aufeinanderfolgenden Batteriespannungsumkehrungen steuert, ein Zeichen für das einwandfreie Funktionieren der Batterie-Inverterschaltung des Teilnehmersatzes ist.